# NEUE EUROPÄISCHE PATENTSCHRIFT

(11) **EP 2 055 535 B2**
(45) Veröffentlichungstag und Bekanntmachung des Hinweises auf die Entscheidung über den Einspruch: **22.10.2014**
(45) Hinweis auf die Patenterteilung: 20.07.2011
(21) Anmeldenummer: 08018440.1
(22) Anmeldetag: 22.10.2008
(51) Int. Cl.: B60R 16/02

(54) **Kabelsatz, insbesondere ein Hochvoltkabelsatz für ein Kraftfahrzeug, sowie eine Vorrichtung zur Durchführung eines elektrischen Kabels und zur Anbindung einer Abschirmung des Kabels**
Cable set, especially a high voltage cable set for a motor vehicle, and device to implement an electric cable and to connect a cable screen
Ensemble de câbles, notamment un ensemble haute tension pour un véhicule automobile, ainsi que dispositif destiné au passage d'un câble électrique et au raccordement d'un blindage du câble

(30) Priorität: 30.10.2007 DE 102007051836
(43) Veröffentlichungstag der Anmeldung: 06.05.2009
(73) Patentinhaber: LEONI Bordnetz-Systeme GmbH, 90402 Nürnberg (DE)
(72) Erfinder: Albert, Volker, 97337 Dettelbach (DE); Ajmi, Taoufik, 97320 Albertshofen (DE)
(74) Vertreter: FDST Patentanwälte

(56) Entgegenhaltungen:
- EP-A- 1 440 834
- EP-A2- 1 045 476
- EP-A2- 1 382 894
- EP-A2- 1 589 801
- CH-A- 184 711
- DE-A1- 10 349 583
- DE-U1- 9 413 938
- US-A1- 2005 162 015

## Beschreibung

Die Erfindung betrifft einen Hochvoltkabelsatz für ein Kraftfahrzeug.

Bei einem eine Abschirmung aufweisenden elektrischen Kabel wird bei der Installation im Bereich einer Kontaktierung der stromdurchflossenen elektrischen Leitung die Abschirmung getrennt von der Leitung ebenfalls kontaktiert, um beispielsweise die Abschirmung auf Masse- oder Erdungspotential zu legen. Die Abschirmung besteht beispielsweise aus einem um die Leitung angeordneten Drahtgeflecht.

In Kraftfahrzeugen werden bei Elektro- oder Hybridfahrzeugen mit elektrischem Antriebsmotor zum Antrieb des Fahrzeugs geschirmte Hochvolt-Kabelsätze zur Energieversorgung der Antriebsmotoren und anderer Aggregate eingesetzt. Die Kabelsätze werden hierbei zwischen Naß- und Trockenbereichen geführt. Beim Übergang zwischen den Bereichen ist auf eine zuverlässige Abdichtung zu achten. So wird beispielsweise auch der mehradrige Kabelsatz, also ein Kabelsatz mit mehreren von einer Abschirmung umgebenen elektrischen Leitungen, an eine so genannte Power Electronic Box (PEB) angeschlossen. Hierzu müssen die Leitungen durch die Wand der Box hindurchgeführt und gleichzeitig muss die Abschirmung angebunden, also kontaktiert werden. Dies geschieht beispielsweise durch eine Anbindung an die Wand der Box.

Das Dokument US-A1-2005/0162015 offenbart einen Kabelsatz gemäß dem Stand der Technik. Hochvoltkabelsätze für Kraftfahrzeuge sind beispielsweise zu entnehmen aus EP 1 589 801 A2 oder aus DE 103 49 583 A1.

Der Erfindung liegt die Aufgabe zugrunde ein Hochvolt-Kabelsatz für ein Kfz mit einer möglichst montagefreundlichen Schirmanbindung anzugeben.

Die Aufgabe wird erfindungsgemäß gelöst durch einen Hochvolt-Kabelsatz für ein Kfz mit den Merkmalen des Anspruchs 1.

Die elektrische Leitung des Kabels umfasst eine äußere Isolationshülle. Die Abschirmung des Kabels, die beispielsweise als ein Drahtgeflecht gegeben ist, umgibt die isolierte elektrische Leitung. Die Abschirmung ist wiederum von einer Kabelisolationshülle umgeben.

Zur Anbindung der Abschirmung des Kabels wird der Schaft der Unterziehhülse einfach unter die Abschirmung geschoben, so dass er sich zwischen der elektrischen Leitung und der Abschirmung befindet. Der verdickte Kopf der Unterziehhülse, der sich beispielsweise ähnlich wie ein Nagelkopf quer zum Schaft erstreckt, ragt insbesondere radial aus dem "Schichtaufbau" des Kabels heraus, so dass er das Durchführelement kontaktiert. Dadurch ist die Abschirmung des Kabels über den Kopf der Unterziehhülse an das Durchführelement angebunden.

Durch das Vorsehen der Unterziehhülse ist insbesondere der Montageaufwand zur Realisierung einer Anbindung der Abschirmung des Kabels sehr gering, da z.B. keine aufwendig anzubringenden Schraub- und/oder Klemmverbindungen notwendig sind.

Um eine gute Anbindung der Abschirmung des Kabels, kurz Schirmanbindung genannt, zu erreichen ist die Unterziehhülse aus einem Material mit einer hohen elektrischen Leitfähigkeit, z.B aus einem Metall, gefertigt.

Das Durchführelement ist z.B. ein plattenförmiges Element und ist für die Schirmanbindung des Kabels in einer Gehäusewandöffnung angeordnet oder an ein Karosserieteil eines Kraftfahrzeugs angebunden.

Vorzugsweise liegt die Unterziehhülse mit dem Kopf formschlüssig in einer Durchführöffnung des Durchführelements ein. Der Kopf wird also nicht von außen an dem Durchführelement gehalten, sondern wird ganz oder teilweise in die Durchführöffnung eingeführt und in dieser formschlüssig gehalten. Dazu sind die Form des Kopfes und die der Durchführöffnung vorzugsweise komplementär ausgeführt, derart dass sie beispielsweise stecker-buchsenartig zueinander ausgebildet sind. Alternativ ist es auch möglich, dass z.B. der Kopf eine elastische Komponente besitzt, die sich beim Einführen des Kopfes in der Durchführöffnung ausdehnt oder aufspreizt. Insgesamt ist es in dieser Ausführung möglich, den Kontaktbereich zwischen dem Kopf und dem Durchführelement zu vergrößern und damit die Schirmanbindung weiter zu verbessern.

In einer vorteilhaften Ausführung ist ein Klemmteil von außen auf das Kabel aufgebracht und klemmt die Abschirmung gegen den eingeschobenen Schaft. Das Klemmteil ist beispielsweise als eine Schraubklemme ausgeführt, die von außen auf die Kabelisolationshülle aufgebracht wird, und die Abschirmung des Kabels fest auf den darunter eingeschobenen Schaft "quetscht". Somit wird eine gute und zudem verrutschsichere Verbindung zwischen dem Schaft und der Abschirmung hergestellt, so dass eine zuverlässige Schirmanbindung gewährleistet wird.

Zweckmäßigerweise ist das Klemmteil eine Crimphülse. Die Abschirmung wird mittels der Crimphülse mit dem Schaft der Unterziehhülse kontaktiert. Unter einer Crimphülse soll hier eine Kabelaufnahmehülse verstanden werden, die z.B. mit einer Crimpzange druckverformt wird, derart dass sie das Kabel fest umschließt.

Die Verwendung einer Crimphülse als Klemmteil bietet sich an, da diese besonders kostengünstig und einfach zu handhaben ist.

Der Kopf der Unterziehhülse ist zwischen einem Befestigungselement und dem Durchführelement eingespannt. Hierdurch wird der Kopf in einer verrutschsicheren Position an dem Durchführelement gehalten, so dass eine zuverlässige Schirmanbindung an das Durchführelement gewährleistet wird. Das Befestigungselement wird vorzugsweise gegen das Durchführelement verschraubt oder verklebt, so dass der Kopf der Unterziehhülse fest zwischen dem Durchführ-und dem Befestigungselement eingespannt ist. Bevorzugt wird über das Befestigungselement zugleich die Unterziehhülse elektrisch kontaktiert.

Zweckmäßigerweise ist das Befestigungselement als eine Befestigungsplatte ausgestaltet. Die Befestigungsplatte wird vorzugsweise an das Durchführelement angeschraubt. In dieser Ausführung ist das Befestigungselement besonders materialsparend und damit kostengünstig herstellbar.

In einer vorteilhaften Ausführung umfasst das Befestigungselement zumindest einen halbschalenartigen Kabelführungsarm. Das Kabel muß also nicht durch eine Kabelöffnung des Befestigungselements "gefädelt" werden. Vielmehr wird das Befestigungselement seitlich an das Kabel herangeführt. Dadurch ist eine sehr einfache Montage des Befestigungselements möglich.

Vorzugsweise ist am Kopf der Unterziehhülse eine Verdrehsicherung ausgebildet. Bevorzugterweise ist die Verdrehsicherung als ein Stift ausgebildet, der in eine Aufnahmeöffnung des Befestigungselements eingreift. Der Stift erstreckt sich insbesondere längs zum Schaft der Unterziehhülse und ist am Kopf angeordnet. Die Aufnahmeöffnung des Befestigungselements, in die der Stift greift, ist beispielsweise als ein Loch oder als eine offene Kerbe gegeben. Die Verdrehsicherung wird hierbei mit sehr einfachen, kostengünstigen Mitteln realisiert. Alternativ zum Stift ist der Kopf beispielsweise nach Art einer Mehrkantschraube mehrkantig ausgeführt und in eine komplementär ausgestaltete mehreckige Durchführöffnung eingesteckt.

In einer vorteilhaften Ausgestaltung ist das Durchführelement nach Art einer Tülle für die Anordnung in einer Gehäusewandöffnung ausgebildet. Damit ist es auf vorteilhafte Weise möglich, das Durchführelement in eine Gehäusewand eines beliebigen elektrischen Geräts oder in eine sonstige Wanddurchführung anzuordnen und somit insbesondere die Abschirmung des Kabels an das dafür geeignete Gehäuse anzubinden. Zu einer Abdichtung umfasst das Durchführelement zweckmäßigerweise eine umlaufende Dichtung. Somit wird beispielsweise gewährleistet, dass in das Gehäuse des elektrischen Geräts keine Feuchtigkeit oder unerwünschten Partikel eindringen können.

Vorzugsweise ist eine Abdichtung vorgesehen für eine längswasserdichte Abdichtung des Kabels im Durchführelement. Dadurch wird insbesondere gewährleistet, dass über die Durchführöffnung keine Feuchtigkeit an die in dem Bereich der Unterschiebung häufig teilweise ungeschützt liegende Abschirmung gelangen kann.

Dazu umfasst die Abdichtung vorzugsweise eine den Kopf der Unterziehhülse umlaufende Dichtung. Dadurch wird auf einfache Weise eine Abdichtung einer Übergangsfuge zwischen dem kopfseitigen Ende des Durchführelements und der Unterziehhülse erreicht. Unter dem kopfseitigen Ende des Durchführelements ist das Ende zu verstehen, an dem der Kopf der Unterziehhülse anliegt.

Vorzugsweise wird für eine Abdichtung einer Übergangsfuge zwischen dem schaftseitigen Ende des Durchführelements und dem eingeschobenen Schaft, insbesondere zwischen dem Durchführelement und dem Klemmteil, die Abdichtung in die genannte Übergangsfuge als eine Abdichtmasse eingebracht. Unter dem schaftseitigen Ende ist in dem Zusammenhang das dem Schaft der Unterziehhülse zugewandte Ende des Durchführelements zu verstehen. Die Abdichtmasse ist hier insbesondere als eine Vergußmasse aus einem geeigneten Abdichtmaterial vorgesehen, und ist z.B. zwischen der Crimphülse und dem Durchführelement vorgesehen, Eine derartige Abdichtmasse schmiegt sich vorteilhaft in die Übergangsfuge ein, so dass diese beispielsweise sicher gegen eindringende Feuchtigkeit abgedichtet ist.

In einer weiter vorteilhaften Ausgestaltung ist die Abdichtung schlauchartig ausgestaltet und ist von außen über das schaftseitige Ende des Durchführelements, und über ein an dem Ende anliegenden Kabelbereich gezogen. Die schlauchartige Abdichtung ist beispielsweise als ein sogenannter Schrumpfschlauch ausgestaltet. Ein derartiger Schrumpfschlauch ist ein Kunststoffschlauch, der sich unter Hitzeeinwirkung stark zusammenzieht. Der Schrumpfschlauch besteht beispielsweise aus einem EPDM (EPDM: Ethylen-Propylen-Dien-Terpolymer-Kautschuk). Dadurch werden das schaftseitige Ende des Durchführelements und das Kabel sozusagen nach Art einer "Folienverschweißung" verbunden, so dass die Übergangsfuge von außen abgedichtet wird. Alternativ ist die schlauchartige Abdichtung als eine tüllenartige Umspritzung aus einem geeigneten Abdichtmaterial.

Die genannten Varianten für einer längswasserdichte Abdichtung des Kabels im Durchführelement, also insbesondere die den Kopf der Unterziehhülse umlaufende Dichtung, die Abdichtmasse und die schlauchartige Abdichtung können dabei sowohl alternativ als auch ergänzend vorgesehen sein. Häufig ist es dabei sinnvoll die umlaufende Dichtung des Kopfes mit einer der genannten alternativen Abdichtungen zu kombinieren. Insbesondere bei einer Abdichtung mit einem Schrumpfschlauch ist es möglich auf die Verwendung der den Kopf der Unterziehhülse umlaufenden Dichtung zu verzichten.

Das Durchführelement besitzt eine Durchführöffnung, durch die das Kabel durchführbar ist. Vorzugsweise ist die Durchführöffnung dafür im Rahmen einer Passtoleranz größer als der Durchmesser des Kabels mit aufgebrachter Crimphülse, so dass dieses sicher darin geführt wird. Der Durchmesser des Kabels ergibt sich insbesondere aus dessen häufig konzentrischen "Schichtaufbau", in dem die insbesondere isolierte elektrische Leitung hülsenartig von einer Abschirmung, beispielsweise einem Drahtgeflecht, und die Abschirmung üblicherweise wiederum von einer Kabelisolationshülle umgeben ist.

Die Unterziehhülse ist zu einer Anbindung der Abschirmung des Kabels an das Durchführelement ausgebildet. Dazu umfasst die Unterziehhülse einen Schaft, der sich insbesondere in einer Längsrichtung erstreckt und eine Schaftöffnung mit einer vorzugsweise runden Querschnittsfläche besitzt.

Zum Einschieben des Schafts unter die Abschirmung des Kabels ist der Innendurchmesser der insbesondere runden Schaftöffnung lediglich geringfügig größer als der Außendurchmesser der elektrischen Leitung des Hochvoltkabels, und der Außendurchmesser des Schafts ist ausreichend klein für ein Einschieben unter die Abschirmung. Insgesamt ist der Schaft also so ausgestaltet, dass er im Rahmen einer Passtoleranz zwischen die Abschirmung und die elektrische Leitung des Kabels geschoben werden kann.

Der Kopf der Unterziehhülse erstreckt sich insbesondere quer zu dem Schaft der Unterziehhülse, und umläuft diesen beispielsweise ringartig, z.B. in Art eines Nagelkopfes. Die radiale Ausdehnung des Kopfes ist dabei größer als der Kabeldurchmesser, so dass der Kopf bei einer eingeschobenen Unterziehhülse insbesondere radial aus dem "Schichtaufbau" des Kabels herausragt.

Die radiale Ausdehnung des Kopfes ist dabei insbesondere ausreichend, um ein vollständiges Hindurchführen des Kopfes durch die Durchführöffnung zu verhindern. Dadurch wird erreicht, dass sich der Kopf im eingeschobenen Zustand der Unterziehhülse insbesondere an einem Rand der Durchführöffnung des Durchführelements abstützt.

Vorzugsweise ist die Durchführöffnung für eine formschlüssige Aufnahme des Kopfes ausgestaltet. Dazu weist die Durchführöffnung beispielsweise einen stufenförmigen Verengungsbereich auf. In dem Fall ist die radiale Ausdehnung des Kopfes kleiner als der Verengungsbereich, so dass der Kopf zwar in die Durchführöffnung eingeführt werden kann, aber beispielsweise am Rand einer Stufe des Verengungsbereichs der Durchführöffnung "hängen" bleibt.

Alternativ kann es vorgesehen sein, dass der Kopf von außen an der Durchführöffnung gehalten wird. In dem Fall besitzt der Kopf einen größeren Durchmesser als die Durchführöffnung, so dass er nicht in die Durchführöffnung eingeführt werden kann, sondern von außen an dem Rand der Durchführöffnung anschlägt.

Ein Ausführungsbeispiel der Erfindung wird anhand einer Zeichnung näher erläutert. Dabei zeigt in schematischer Darstellung:
- FIG 1: eine Unterziehhülse,
- FIG 2: einen Kabelsatz in einem vormontierten Zustand in einer Explosionsdarstellung,
- FIG 3: einen Querschnitt durch einen Kabelsatz in einem montierten Zustand,
- FIG 4: ein stark schematischer Querschnitt durch einen weiteren Kabelsatz in einem montierten Zustand und
- FIG 5: der in FIG 4 dargestellte Kabelsatz in einer Draufsicht.

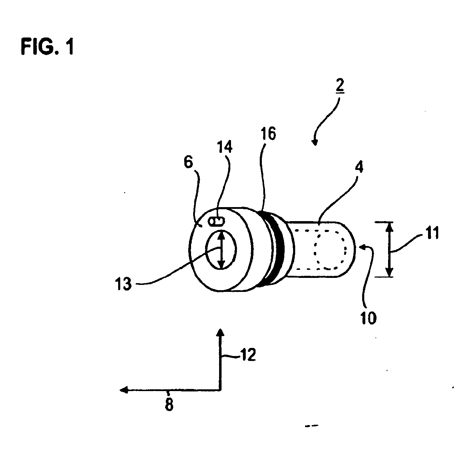

Eine Unterziehhülse 2 umfasst gemäß FIG 1 einen Schaft 4 und einen Kopf 6.

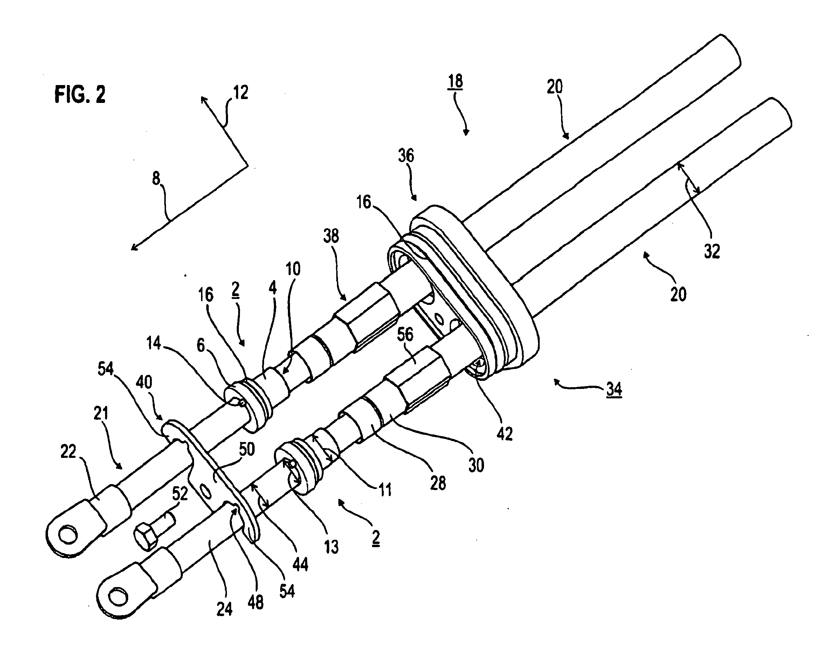

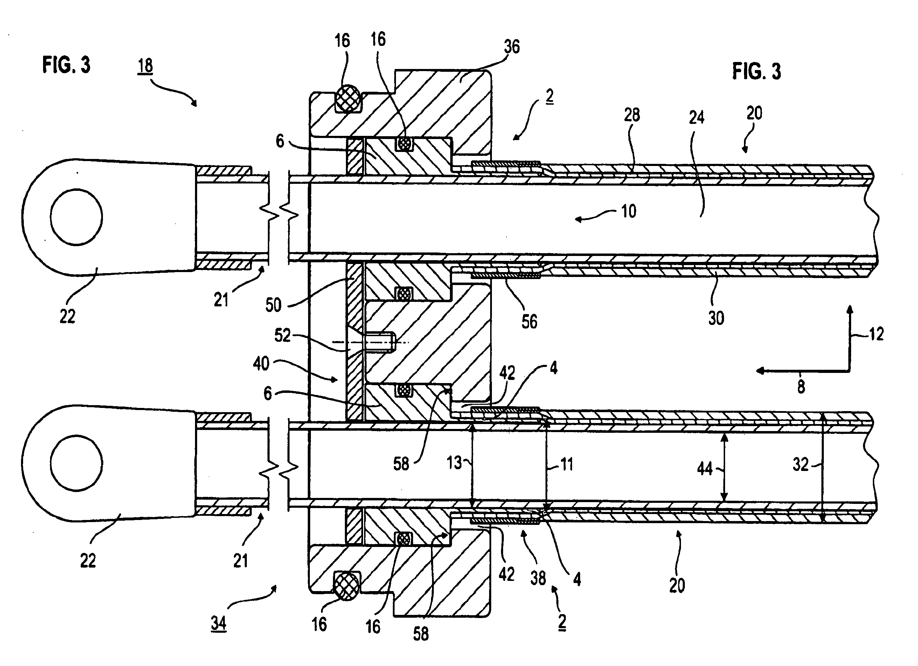

Der Schaft 4 erstreckt sich in einer Längsrichtung 8 und besitzt eine runde Schaftöffnung 10. Der ringförmig ausgeführte Kopf 6 der Unterziehhülse 2 ist gegenüber dem Schaft 4 verdickt, so dass er den Außendurchmesser 11 des Schafts 4 in Querrichtung 12 überragt. Der Schaft 4 wird, wie in den Fig. 2 und 3 ersichtlich, zu einer Schirmanbindung eines Kabels 20 mit dem Innendurchmesser 13 der Schaftöffnung 10 über eine elektrische Leitung 24 des Kabels 20 geschoben.

Der Kopf 6 der Unterziehhülse 2 umfasst einen Stift 14, der sich in Längsrichtung 8 erstreckt und der zu einer Verdrehsicherung der Unterziehhülse 2 vorgesehen ist (vgl. FIG 2). Der Kopf 6 umfasst weiterhin eine Dichtung 16, die am Kopf 6 ringartig umläuft.

Der in FIG 2 dargestellte Kabelsatz 18 umfasst zwei Kabel 20, die hier als zwei Hochvoltkabel für ein Kraftfahrzeug gegeben sind.

Das Kabelende 21 beider in Längsrichtung 8 verlaufender Kabel 20 ist jeweils mit einem Kabelschuh 22 versehen und über den Kabelschuh 22 beispielsweise an einem Elektromotor oder eine Batterie anschließbar. Dazu ist der Kabelschuh 22 an einen Leiter einer elektrischen Leitung 24 des Kabels 20 angeschlagen.

In der Darstellung gut erkennbar ist der "Schichtaufbau" des Kabels 20, bei dem die elektrische Leitung 24, also ein von einer Isolierung umgebener elektrischer Leiter, von einer Abschirmung 28 umgeben ist. Die Abschirmung 28, die hier als ein Drahtgeflecht gegeben ist, ist wiederum von einer Kabelisolationshülle 30 umgeben. Der Kabeldurchmesser 32 wird somit durch diesen konzentrischen Schichtaufbau des Kabels 20 bestimmt.

Bei einem Einführen des Kabelendes 21 in ein Gehäuse eines elektrischen Geräts, beispielsweise in die so genannte Power Electronic Box, ist es notwendig, die Abschirmung 28 des Kabels 20 z.B. für eine Erdung an die Gehäusewand anzubinden. Dazu umfasst der Kabelsatz 18 eine Vorrichtung 34 zur Schirmanbindung und zur Durchführung des Kabelendes 22.

Die Vorrichtung 34 umfasst ein Durchführelement 36, und die Unterziehhülse 2, sowie ein Klemmteil 38 und ein Befestigungselement 40 zur Befestigung der Unterziehhülse 2.

Das Durchführelement 36 ist nach Art einer Tülle für die Anordnung in einer Gehäusewandöffnung ausgestaltet, so dass es einfach in eine Gehäusewand eines elektrischen Geräts einsteckbar ist. Zur sicheren Abdichtung umfasst das Durchführelement 36 eine umlaufende Dichtung 16. Zum Durchführen der zwei Kabelenden 21 des Kabelsatzes 18 besitzt das Durchführelement 36 zwei Durchführöffnungen 42. Die Größe der Durchführöffnung 42 ist dabei im Wesentlichen dem Kabeldurchmesser 32 angepasst, so dass diese abgedichtet hindurchgeführt sind.

Die Unterziehhülse 2 ist mit ihrem in Längsrichtung 8 verlaufenden Schaft 4 auf die isolierte elektrische Leitung 24 aufgeschoben. Dazu besitzt der Schaft 4 der Unterziehhülse 36 eine runde Schaftöffnung 10, deren Innendurchmesser 13 geringfügig größer ist als der Außendurchmesser 44 der elektrischen Leitung 24. Für ein Einschieben des Schafts 4 unter die Abschirmung 28 des Kabels 20 ist der Außendurchmesser 11 ausreichend klein, um den Schaft 4 der Unterziehhülse 2 zwischen die Abschirmung 28 und die elektrische Leitung 24 des Kabels 20 zu schieben.

Der Kopf 6 der Unterziehhülse 2 ist gegenüber dem Schaft 4 verdickt und umgibt diesen ringartig. Die radiale Ausdehnung des Kopfes ist dabei größer als der Kabeldurchmesser 32. Dadurch ragt der Kopf 6 z.B. in Querrichtung 12 aus dem "Schichtaufbau" des Kabels 20 heraus. Im vollständig montierten Zustand des Kabelsatzes 18 (vgl. FIG. 3) ist die Unterziehhülse 2 an das Durchführelement 36 herangeführt, so dass der Kopf 6 in der Durchführöffnung 42 des Durchführelements 36 formschlüssig einliegt. Dadurch wird die Abschirmung 28 des Kabels 20 über den Kopf 6 an das Durchführelement 36 angebunden. Der Kopf 6 der Unterziehhülse 2 umfasst zusätzlich eine Dichtung 16, die den Kopf 6 ringförmig umläuft.

Der Stift 14 des Kopfes 6 greift im montierten Zustand des Kabelsatzes 18 (vgl.
FIG 3) zur Verdrehsicherung der Unterziehhülse 2 in eine als offene Kerbe ausgeführte Aufnahmeöffnung 48 des Befestigungselements 40 ein.

Das Befestigungselement 40 ist hier als eine Befestigungsplatte 50 gegeben. Im montierten Zustand des Kabelsatzes 18 (vgl. FIG. 3) wird der Kopf 6 der Unterziehhülse 2 zwischen der Befestigungsplatte 50 und dem Durchführelement 36 eingespannt. Dazu wird die Befestigungsplatte 50, aus der Richtung des Kabelschuhs 22 gesehen, vor dem Kopf 6 an das hinter dem Kopf 6 liegende Durchführelement 36 mittels einer Schraube 52 angeschraubt. Dadurch wird eine in Längsrichtung 8 verrutschsichere Positionierung des Kopfes 6 in der Durchführöffnung 42 des Durchführelements 36 gewährleistet. Der Kopf 6 kann sozusagen aus der Durchführöffnung 42 nicht herausrutschen. Zusätzlich wird der Kopf 6, durch das Eingreifen des an der Stirnseite des Kopfes 6 angeordneten Stifts 14 in die kerbenartige Aufnahmeöffnung 48 der Befestigungsplatte 50, in einer verdrehsicheren Position gehalten. Insgesamt wird dadurch eine zuverlässige Schirmanbindung des Kabels 20 an das Durchführelement 36 gewährleistet.

Um eine einfache Montage der Befestigungsplatte 50 zu ermöglichen, besitzt diese zwei halbschalenartige Kabelführungsarme 54. Damit ist es möglich, die ankerförmige Befestigungsplatte 50 direkt an der gewünschten Position einfach auf die Kabel 20 des Kabelsatzes 18 aufzusetzen und dann an das Durchführelement 36 anzuschrauben.

Die Vorrichtung 2 umfasst zusätzlich das Klemmteil 38, das im Ausführungsbeispiel als eine Crimphülse 56 gegeben ist. Die Crimphülse 56 ist auf die Kabelisolationshülle 30 des Kabels 20 geschoben. Im montierten Zustand des Kabelsatzes 18 "quetscht" die Crimphülse 56 die Abschirmung 28 des Kabels 20 auf den darunter eingeschobenen Schaft 4 der Unterziehhülse 2. Dadurch wird eine sehr gute elektrische Verbindung zwischen dem Schaft 4 und der Abschirmung 28 des Kabels 20 realisiert, so dass eine zuverlässige Schirmanbindung gewährleistet werden kann. Zugleich wird hierdurch eine Zugentlastung für die Leitung 24 ausgebildet.

In der in FIG 3 gezeigten Querschnittsdarstellung ist gut ersichtlich, wie im vollständig montierten Zustand des Kabelsatzes 18 der Kopf 6 der Unterziehhülse 2 formschlüssig im Durchführelement 36 auf einem Rand der Durchführöffnung 42 einliegt. Dadurch ist der Kopf 6 über einen großen Verbindungsbereich mit dem Durchführelement 36 verbunden. Somit wird eine großflächige und damit effektive Anbindung der Abschirmung 28 des Kabels 20 an das Durchführelement 36 erreicht.

Die Form des Kopfes 6 und die der Durchführöffnung 42 sind insbesondere stecker-buchsenartig zueinander ausgebildet. Die Durchführöffnung 42 weist dazu insbesondere einen stufenförmigen Querschnitt auf, so dass der Kopf 6 bei einem Einführen aus Richtung des Kabelschuhs 22 in die Durchführöffnung 42 an eine Stufe 58 anschlägt und nicht vollständig durch die Durchführöffnung 42 gezogen werden kann. Von der der Stufe 58 gegenüberliegenden Seite der Durchführöffnung 42 ist die Befestigungsplatte 50 an das Durchführelement 36 angeschraubt. Insgesamt ist somit der Kopf 6 der Unterziehhülse 2 in Längsrichtung 8 verrutschsicher mit dem Durchführelement 36 verbunden.

Deutlich im Querschnitt erkennbar ist auch, wie der Schaft 4 der Unterziehhülse 2 zwischen die isolierte elektrische Leitung 24 und die Abschirmung 28 des Kabels 20 geschoben ist. Die von außen auf das Kabel 20 aufgebrachte Crimphülse 56 quetscht die Abschirmung 28 des Kabels 20 auf den Schaft 4, so dass dieser gut mit der Abschirmung 28 kontaktiert und verrutschsicher verbunden ist.

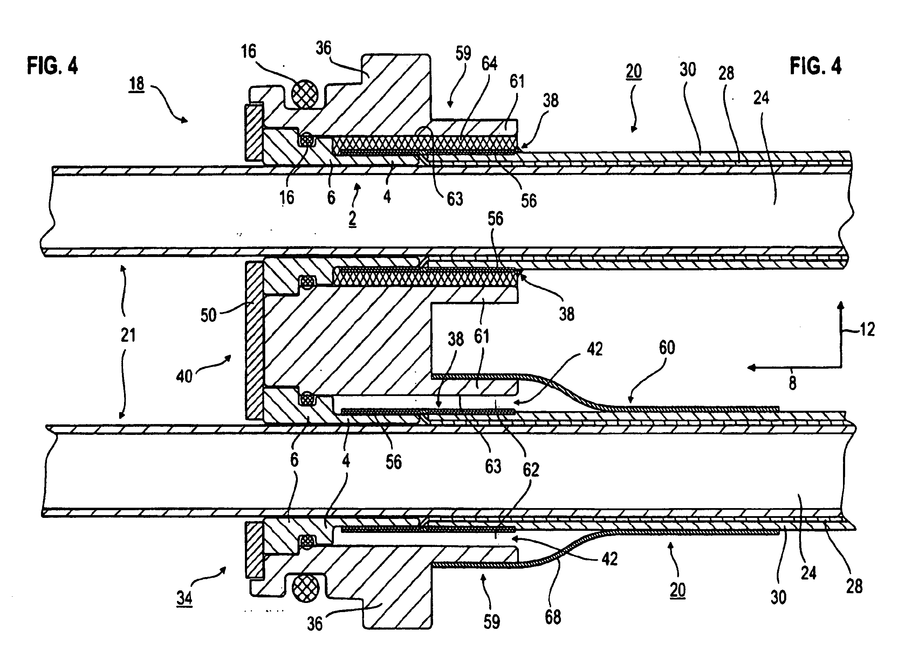

Die in FIG 4 zeigt eine weitere Ausführungsvariante des Kabelsatzes 18 mit zwei Kabeln 20, sowie einer Vorrichtung 34 zur Schirmanbindung und zur Durchführung des jeweiligen Kabelendes 22. Das Kabelende 22 ist auch hier durch eine Durchführöffnung 42 des Durchführelements 36 hindurchgeführt. Deutlich erkennbar ist auch, wie der Schaft 4 der Unterziehhülse 2 zwischen die isolierte elektrische Leitung 24 und die Abschirmung 28 des Kabels 20 geschoben ist. Ebenso wie in FIG 3 dargestellt, quetscht das als Crimphülse 56 ausgeführte Klemmteil 38 die Abschirmung 28 des Kabels 20 von außen auf den Schaft 4. Deutlich ist in dieser Abbildung zu erkennen, wie die Crimphülse 56 von außen auch auf die Kabelisolationshülle 30 des Kabels 20 aufgebracht ist, wodurch insbesondere eine Zugentlastung der Leitung 24 erreicht wird.

Ebenso wie in den Figuren 2 und 3 ist das Durchführelement 36 nach Art einer Tülle für den Einbau in ein elektrisches Gerät ausgestaltet. Im Gegensatz zu den genannten Darstellungen ist die Durchführöffnung 42 an dem schaftseitigen Ende 59 von einem umlaufenden hülsenartigen Kragen 61 umgeben. Unter dem schaftseitigen Ende 59 des Durchführelements 36 ist dabei das Ende zu verstehen, das dem Schaft 4 der Unterziehhülse 2 zugewandt ist.

Wie in den Figuren 2 und 3 ist der Kopf 6 der Unterziehhülse 2, sowie das Durchführelement 36 von einer umlaufenden Dichtung 16 umgeben. Zusätzlich umfasst der in FIG 4 gezeigte Kabelsatz 18 eine Anzahl weiterer Abdichtungen 16, 60, 64 insbesondere auch für eine längswasserdichte Abdichtung einer Übergangsfuge 62. In dem hier dargestellten Kabelsatz 18 ist die Übergangsfuge 62 im Wesentlichen durch die von außen auf das Kabel 20 und den Schaft 4 aufgebrachte Crimphülse 56, sowie eine Wandung 63 der Durchführöffnung 42 des Durchführelements 36 begrenzt.

Die in der oberen Bildhälfte dargestellte Übergangsfuge 62 ist durch eine Abdichtmasse 64 aus einem geeigneten Abdichtmaterial abgedichtet. Die Abdichtmasse 64 ist dazu zwischen die Crimphülse 56 und das schaftseitige Ende 59 des Durchführelements 36 eingebracht. Deutlich ist zu erkennen, wie die Abdichtmasse 64 die Übergangsfuge 62 verschließt. Dadurch ist insbesondere gewährleistet, dass über die Übergangsfuge 62 keine Feuchtigkeit an die in dem Bereich der Unterschiebung teilweise ungeschützt liegende Abschirmung 28 gelangen kann.

Die in der unteren Bildhälfte dargestellte Abdichtung 60 ist schlauchartig ausgeführt und hier als ein Schrumpfschlauch 68 gegeben. Der Schrumpfschlauch 68 ist von außen über das schaftseitige Ende des Durchführelements 36, insbesondere über dessen Kragen 61, und über das Kabel 20 gezogen. Dadurch wird die Übergangsfuge 62 von außen abgedichtet.

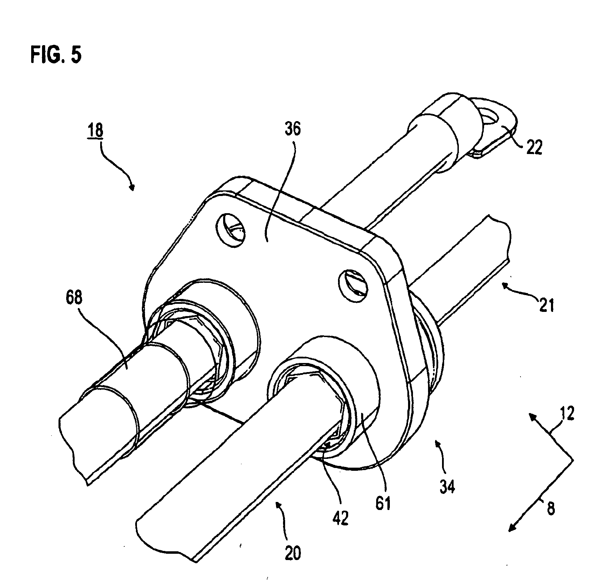

Der in FIG 4 beschriebene Kabelsatz 18 ist in FIG 5 in einer Draufsicht gezeigt. In dieser Darstellung ist gut zu erkennen, wie jeweils ein Kragen 61 die beiden Durchführöffnungen 42 des Durchführelements 36 hülsenartig umgibt. Durch den Kragen 61 wird das durch die Durchführöffnung 42 hindurchgeführte Kabel 20 in einer geführten Position gehalten. Gut zu erkennen ist auch, wie der Schrumpfschlauch 68 über eines der beiden Kabel 20, sowie über den entsprechenden Kragen 61 gezogen ist, und sowohl dicht mit dem Kabel 20, als auch mit dem Kragen 61 abschließt. Dadurch wird die Durchführöffnung 42 von außen abgedichtet, so dass insbesondere die Schirmanbindung nicht durch eindringende Feuchtigkeit beeinträchtigt wird.

### Bezugszeichenliste

- 2: Unterziehhülse
- 4: Schaft
- 6: Kopf
- 8: Längsrichtung
- 10: Schaftöffnung
- 11: Außendurchmesser -Schaft
- 12: Querrichtung
- 13: Innendurchmesser -Schaftöffnung
- 14: Stift
- 16: Dichtung
- 18: Kabelsatz
- 20: Kabel
- 21: Kabelende
- 22: Kabelschuh
- 24: elektrische Leitung
- 28: Abschirmung
- 30: Kabelisolationshülle
- 32: Kabeldurchmesser
- 34: Vorrichtung
- 36: Durchführelement
- 38: Klemmteil
- 40: Befestigungselement
- 42: Durchführöffnung
- 44: Außendurchmesser -elektrische Leitung
- 48: Aufnahmeöffnung
- 50: Befestigungsplatte
- 52: Schraube
- 54: Kabelführungsarm
- 56: Crimphülse
- 58: Stufe
- 59: schaftseitiges Ende
- 60: Abdichtung
- 61: Kragen
- 62: Übergangsfuge
- 63: Wandung
- 64: Abdichtmasse
- 68: Schrumpfschlauch

## Patentansprüche

1. Hochvoltkabelsatz für ein Kraftfahrzeug, mit zumindest einem elektrischen Kabel (20), das eine elektrische Leitung (24), eine diese umgebende Abschirmung (28) und eine die Abschirmung (28) wiederum umgebende Kabelisolationshülle (30) umfasst, sowie mit einer Vorrichtung (34) zur Durchführung des Kabels (20) und zur Anbindung der Abschirmung (28) des Kabels (20), wobei die Vorrichtung (34) eine Unterziehhülse (2) sowie ein Durchführelement (36) aufweist, durch das ein Kabelende (21) durchgeführt ist und das für eine Schirmanbindung des Kabels an eine Gehäusewandöffnung oder an ein Karosserieteil ausgebildet ist , wobei die Unterziehhülse (2) einen Schaft (4) und einen gegenüber dem Schaft (4) verbreiterten Kopf (6) umfasst und die Unterziehhülse (2) mit dem Schaft (4) zwischen die elektrische Leitung (24) und der Abschirmung (28) eingeschoben sowie mit dem Kopf (6) am Durchführelement (36) gehalten ist, wobei hierzu der Schaft (4) eine runde Schaftöffnung (10) besitzt, deren Innendurchmesser (13) geringfügig größer ist als der Außendurchmesser (44) der elektrischen Leitung (24), und wobei der Kopf (6) der Unterziehhülse (2) zwischen einem Befestigungselement (40) und dem Durchführelement (36) eingespannt ist.

2. Kabelsatz (18) nach Anspruch 1,
wobei die Unterziehhülse (2) mit dem Kopf (6) formschlüssig in einer Durchführöffnung (42) des Durchführelements (36) einliegt.

3. Kabelsatz (18) nach einem der vorhergehenden Ansprüche,
wobei ein Klemmteil (38) insbesondere eine Crimphülse (56) von außen auf das Kabel (20) aufgebracht ist und die Abschirmung (28) gegen den eingeschobenen Schaft (4) klemmt.

4. Kabelsatz (18) nach einem der vorhergehenden Ansprüche,
wobei das Befestigungselement (40) als eine Befestigungsplatte (50) ausgestaltet ist.

5. Kabelsatz (18) nach einem der vorhergehenden Ansprüche,
wobei das Befestigungselement (40) zumindest einen halbschalenartigen Kabelführungsarm (54) umfasst.

6. Kabelsatz (18) einem der vorhergehenden Ansprüche,
wobei am Kopf (6) der Unterziehhülse (2) eine Verdrehsicherung ausgebildet ist.

7. Kabelsatz (18) nach Anspruch 6,
wobei die Verdrehsicherung als ein Stift (14) ausgebildet ist, der in eine Aufnahmeöffnung (48) des Befestigungselements (40) eingreift.

8. Kabelsatz (18) nach einem der vorhergehenden Ansprüche,
wobei das Durchführelement (36) nach Art einer Tülle für die Anordnung in einer Gehäusewandöffnung ausgebildet ist.

9. Kabelsatz (18) nach einem der vorhergehenden Ansprüche,
wobei das Durchführelement (36) eine umlaufende Dichtung (16) umfasst.

10. Kabelsatz (18) nach einem der vorhergehenden Ansprüche,
wobei eine Abdichtung (16, 60, 64) vorgesehen ist für eine längswasserdichte Abdichtung des Kabels (20) im Durchführelement (36).

11. Kabelsatz (18) nach Anspruch 10,
wobei die Abdichtung eine den Kopf (6) der Unterziehhülse (2) umlaufende Dichtung (16) umfasst.

12. Kabelsatz (18) nach Anspruch 10 oder 11,
wobei die Abdichtung in eine Übergangsfuge (62) zwischen einem schaftseitigen Ende (59) des Durchführelements (36) und dem eingeschobenen Schaft (4), insbesondere zwischen dem Durchführelement (36) und dem Klemmteil (38), als eine Abdichtmasse (64) eingebracht ist.

13. Kabelsatz (18) nach einem der Ansprüche 10 bis 12,
wobei die Abdichtung (60) schlauchartig ausgestaltet ist und von außen über das schaftseitige Ende (59) des Durchführelements (36) und über ein an dem Ende (59) anliegenden Kabelbereich gezogen ist.

## Claims

1. High-voltage cable harness for a motor vehicle, having at least one electric cable (20) comprising an electric line (24), a shield (28) surrounding said electric line (24) and a cable insulation sheath (30) which in turn surrounds the shield (28), as well as having a device (34) for guiding-through of the cable (20) and for connecting the shield (28) of the cable (20), wherein the device (34) comprises an under-sleeve (2) and a lead-through element (36) through which a cable end (21) is guided and which is designed for a shield connection of the cable to a housing wall opening or to a body part, wherein the under-sleeve (2) comprises a shaft (4) and a head (6) which is widened compared to said shaft (4) and the under-sleeve (2) with said shaft (4) is inserted between the electric line (24) and the shield (28) as well as held by the head (6) at the lead-through element (36), wherein, to this end, the shaft (4) has a round shaft opening (10) of which the inside diameter (13) is slightly larger than the outside diameter (44) of the electrical line (24), and wherein the head (6) of the under-sleeve (2) is clamped between a securing element (40) and the lead-through element (36).

2. Cable harness (18) according to claim 1,
wherein the under-sleeve (2) engages with the head (6) in a form fitting manner in a lead-through opening (42) of the lead-through element (36).

3. Cable harness (18) according to one of the previous claims,
wherein a clamping part (38), in particular a crimp sleeve (56), is applied to the cable (20) from the outside and clamps the shield (28) against the inserted shaft (4).

4. Cable harness (18) according to one of the previous claims,
wherein the securing element (40) is configured as a securing plate (50).

5. Cable harness (18) according to one of the previous claims,
wherein the securing element (40) comprises at least one half-shell-like cable routing arm (54).

6. Cable harness (18) according to one of the previous claims,
wherein the under-sleeve (2) at its head (6) has an anti-twist device.

7. Cable harness (18) according to claim 6,
wherein the anti-twist device is developed as a pin (14), which engages in a receiving opening (48) of the securing element (40).

8. Cable harness (18) according to one of the previous claims,
wherein the lead-through element (36) is developed as a type of bushing for arrangement in an opening in a housing wall.

9. Cable harness (18) according to one of the previous claims,
wherein the lead-through element (36) comprises a circumferential seal (16).

10. Cable harness (18) according to one of the previous claims,
wherein a sealing device (16, 60, 64) is provided for longitudinal watertight sealing of the cable (20) in the lead-through element (36).

11. Cable harness (18) according to claim 10,
wherein the sealing device comprises a seal (16) that extends around the head (6) of the under-sleeve (2).

12. Cable harness (18) according to claim 10 or 11,
wherein the sealing device is positioned as a sealing compound (64) in a transition joint (62) between an end (59) at the shaft side of the lead-through element (36) and the inserted shaft (4), in particular between the lead-through element (36) and the clamping part (38).

13. Cable harness (18) according to one of the claims 10 to 12,
wherein the sealing device (60) is tube-like and pulled from the outside over the end (59) at the shaft side of the lead-through element (36) and over a cable region that adjoins said end (59).

## Revendications

1. Faisceau de câbles haute tension pour un véhicule automobile, comprenant au moins un câble électrique (20), qui englobe un conducteur électrique (24), un blindage (28) entourant celui-ci et une gaine d'isolation de câble (30) entourant à son tour le blindage (28), ainsi qu'un dispositif (34) pour la traversée du câble (20) et pour attacher le blindage (28) du câble (20), le dispositif (34) présentant une douille de fourrure (2) et un élément de traversée de câble (36), dans lequel passe une extrémité de câble (21) et qui est réalisé au niveau d'une ouverture de paroi de carter ou d'une partie de carrosserie pour une liaison blindée du câble, la douille de fourrure (2) présentant un corps allongé (4) et une tête (6) élargie par rapport au corps allongé (4) et la douille de fourrure (2) étant insérée, avec le corps allongé (4), entre le conducteur électrique (24) et le blindage (28), et étant maintenue, avec la tête (6), sur l'élément de traversée de câble (36), le corps allongé (4) possédant à cet effet une ouverture de corps allongé (10) circulaire dont le diamètre interne (13) est légèrement supérieur au diamètre externe (44) du conducteur électrique (24), et la tête (6) de la douille de fourrure (2) étant enserrée entre un élément de fixation (40) et l'élément de traversée de câble (36).

2. Faisceau de câbles (18) selon la revendication 1,
dans lequel la douille de fourrure (2) est encastrée avec la tête (6), par complémentarité de formes, dans une ouverture de traversée de câble (42) de l'élément de traversée de câble (36).

3. Faisceau de câbles (18) selon l'une des revendications précédentes,
dans lequel une pièce de serrage (38), notamment une douille de sertissage (56), est rapportée de l'extérieur sur le câble (20) et serre le blindage (28) contre le corps allongé (4) inséré.

4. Faisceau de câbles (18) selon l'une des revendications précédentes,
dans lequel l'élément de fixation (40) est réalisé sous la forme d'une plaque de fixation (50).

5. Faisceau de câbles (18) selon l'une des revendications précédentes,
dans lequel l'élément de fixation (40) comprend au moins un bras de guidage de câble (54) en forme de demi-coque.

6. Faisceau de câbles (18) selon l'une des revendications précédentes,
dans lequel sur la tête (6) de la douille de fourrure (2) est formé un dispositif d'arrêt de rotation.

7. Faisceau de câbles (18) selon la revendication 6, dans lequel le dispositif d'arrêt de rotation est réalisé sous la forme d'une cheville (14) qui s'engage dans une ouverture de logement (48) de l'élément de fixation (40).

8. Faisceau de câbles (18) selon l'une des revendications précédentes,
dans lequel l'élément de traversée de câble (36) est réalisé à la manière d'un élément de passe-câble pour l'agencement dans une ouverture de paroi de carter.

9. Faisceau de câbles (18) selon l'une des revendications précédentes,
dans lequel l'élément de traversée de câble (36) comporte un joint d'étanchéité (16) périphérique.

10. Faisceau de câbles (18) selon l'une des revendications précédentes,
dans lequel il est prévu un système d'étanchéité (16, 60, 64) pour assurer une étanchéité longitudinale à l'eau du câble (20) dans l'élément de traversée de câble (36).

11. Faisceau de câbles (18) selon la revendication 10,
dans lequel le système d'étanchéité comprend un joint d'étanchéité (16) entourant la tête (6) de la douille de fourrure (2).

12. Faisceau de câbles (18) selon la revendication 10 ou la revendication 11,
dans lequel le système d'étanchéité est introduit, sous forme de masse d'étanchéité (64), dans un gradin d'étagement (62) entre une extrémité du côté du corps allongé (59) de l'élément de traversée de câble (36) et le corps allongé (4) inséré, notamment entre l'élément de traversée de câble (36) et la pièce de serrage (38) .

13. Faisceau de câbles (18) selon l'une des revendications 10 à 12,
dans lequel le système d'étanchéité (60) est d'une configuration en forme de gaine souple, et est emmanché de l'extérieur par-dessus l'extrémité du côté du corps allongé (59) de l'élément de traversée de câble (36) et par-dessus une zone du câble adjacente à l'extrémité (59).
